# EUROPÄISCHE PATENTSCHRIFT

(11) **EP 3 045 766 B1**
(45) Veröffentlichungstag und Bekanntmachung des Hinweises auf die Patenterteilung: **02.10.2019**
(21) Anmeldenummer: 16150225.7
(22) Anmeldetag: 05.01.2016
(51) Int. Cl.: F16F 13/10, F16F 13/26

(54) **HYDRAULISCH DÄMPFENDES LAGER**
HYDRAULICALLY DAMPING BEARING
SUPPORT A AMORTISSEMENT HYDRAULIQUE

(30) Priorität: 13.01.2015 DE 102015100429
(43) Veröffentlichungstag der Anmeldung: 20.07.2016
(73) Patentinhaber: Vibracoustic GmbH, 64293 Darmstadt (DE)
(72) Erfinder: BECKMANN, Wolfgang, 64289 Darmstadt (DE); YILDIRIM, Gamze, 68159 Mannheim (DE)
(74) Vertreter: Flügel Preissner Schober Seidel

(56) Entgegenhaltungen:
- EP-A1- 0 357 245
- EP-A1- 1 367 289
- GB-A- 2 087 512
- US-A- 5 667 205

## Beschreibung

Die Erfindung betrifft eine Ausgleichsmembran für ein hydraulisch dämpfendes Lager, insbesondere für ein schaltbares Lager.

Ausgleichsmembranen dieser Art werden in hydraulisch dämpfenden Lagern eingesetzt, die insbesondere zur Lagerung von Kraftfahrzeugaggregaten verwendet werden, um die während des Betriebs auftretenden Schwingungen zu dämpfen bzw. zu tilgen. Hierbei weist das hydraulisch dämpfende Lager eine flüssigkeitsgefüllte Arbeitskammer und eine Ausgleichkammer auf, die über einen Dämpfungskanal miteinander verbunden sind. Die Ausgleichsmembran begrenzt die Ausgleichskammer variablen Volumens, um die als Folge einer Relativbewegung des Kraftfahrzeugaggregats entstehenden Fluidvolumina nach Möglichkeit drucklos aufzunehmen. Hierzu ist es vorteilhaft, wenn die Ausgleichsmembran ungehindert expandieren kann.

Wenn aufgrund der Bauweise eines hydraulisch dämpfenden Lagers, insbesondere eines schaltbaren Hydroagers, ein Anliegen der Ausgleichsmembran an umliegenden Komponenten, insbesondere ein topfförmiges Gehäuse, nicht vermieden werden kann, kann sich die Ausgleichsmembran im Betrieb abreiben, was zu Wandstärkenreduzierung bis hin zu Rissen und dadurch zum Ausfall des gesamten Lagers führen kann.

US 5 667 205 A offenbart eine Dämpfungsvorrichtung, welche eine erste Kammer 130 aufweist, die durch eine Trennplatte 100 von einer zweiten Kammer 140 getrennt ist. Die zweite Kammer ist durch ein elastomeres Diaphragma 150 begrenzt und weist eine Öffnung 120 zu der ersten Kammer 130 auf, die durch einen Ventilkörper 160 mit einer Metallplatte 168 und einer Elastomerdichtung 164 schaltbar geöffnet oder verschlossen werden kann. Die dafür notwendige Schalteinrichtung weist eine Rückstellfeder 166 und eine Luftkammer 180 auf. Auf einem Schulterbreich der Metallplatte 168 ist ein Stopper 169 aus einem elastomeren Material vorgesehen, um Abrieb durch Kontakt zwischen der Metallplatte 168 und dem Diaphragma 150 zu verhindern.

DE 31 45 446 A1 offenbart einen Flüssigkeits/Feder- Dämpfer umfassend eine Hauptflüssigkeitskammer 26, die durch eine elastomere Scherfeder 20 von einer zweiten Flüssigkeitskammer 34 getrennt ist. Innerhalb der zweiten Flüssigkeitskammer 34 ist ein länglicher ausweitbarer und zusammenziebarer Balg 50 angeordnet. Der Balg 50 weist eine Anzahl, im Abstand zueinander angeordnete Abrieb- oder Verschleißkörper auf, welche den Abrieb des Balgs 50 auf einen Mindestwert herabsetzen. Dadurch ist es möglich, eine Glättung bzw. Feinbearbeitung der Innenwand der zweiten Flüssigkeitskammer 34 wegzulassen. Die Abrieb - oder Verschleißkörper sind als umlaufende Ringe 70 ausgebildet. Die Hauptflüssigkeitskammer 26 ist durch ein elastomeres Diaphragma 74 begrenzt, das an der Umfangswand 76 des Außenteils 18 ansitzt. Am Diaphragma 74 sind nach außen abstehende Rippen 78 einstückig ausgebildet, welche von der Diaphragmawand 80 auf das innenteil 16 zu zeigen. Diese Rippen 78 sind im Bereich der Berührungspunkte angeordnet, dort wo das Diaphragma 74 die elastomere Scherfeder 20 berühren könnte. Dadurch wird ein zerstörerischer Abrieb ausgeschlossen und Flüssigkeitsdurchlässe gewährleistet, um damit eine hydraulische Sperre zwischen dem Innenteil 16 und dem Diaphragma 74 auszuschließen.

Der Erfindung liegt daher die **Aufgabe** zugrunde, eine Ausgleichsmembran für ein hydraulisch dämpfendes Lager der eingangs genannten Art derart weiterzubilden, dass die Lebensdauer der Membran bei im Wesentlichen unveränderter Volumensteifigkeit erhöht ist.

Zur **Lösung** dieser Aufgabe wird eine Ausgleichsmembran mit den Merkmalen des Anspruchs 1 vorgeschlagen. Vorteilhafte Ausgestaltungen der erfindungsgemäßen Ausgleichsmembran sind Gegenstand der abhängigen Ansprüche.

Bei der erfindungsgemäßen Ausgleichsmembran verhindert die Abriebeinrichtung eine Beschädigung der Ausgleichsmembran im Betrieb, wodurch die Lebensdauer der Ausgleichsmembran erhöht ist. Dabei bleibt die Volumensteifigkeit der Ausgleichsmembran im Wesentlichen unverändert.

In vorteilhafter Ausgestaltung weist die Abriebeinrichtung mehrere voneinander beabstandete Noppen auf, die von der Oberseite der Ausgleichsmembran abragen. Vorteilhaft sind die Noppen in Umfangsrichtung versetzt angeordnet.

Bei einer anderen vorteilhaften Ausgestaltung kann die Abriebeinrichtung auch eine ringförmige Verdickungsschicht aufweisen.

In vorteilhafter Ausgestaltung ist die Abriebeinrichtung radial ringförmig um die Mittelachse angeordnet und an die Ausgleichsmembran anvulkanisiert. Aufgrund verschiedener Bauarten von hydraulisch dämpfenden Lagern ist der radiale Abstand der Abriebeinrichtung zur Mittelachse derart festgelegt, dass die Abriebeinrichtung während des Betriebes auf die Kontaktfläche trifft.

Die erfindungsgemäße Ausgleichsmembran bewirkt eine deutlich verbesserte Lebensdauer der Ausgleichsmembran. Durch gezieltes Platzieren der Abriebeinrichtung auf der Ausgleichsmembran in dem Verschleiß ausgesetzten Bereich kann die räumliche Ausdehnung der Abriebeinrichtung gering gehalten werden und somit die Volumensteifigkeit der Ausgleichsmembran im Wesentlichen unverändert bleiben.

Nachfolgend wird die erfindungsgemäße Ausgleichsmembran anhand der beigefügten Zeichnungen näher erläutert. Hierbei zeigen schematisch:
- Fig. 1: einen Längsschnitt durch ein schaltbares hydraulisch dämpfenden Lager mit einer erfindungsgemäßen Ausgleichsmembran;
- Fig. 2: einen Vertikalschnitt durch eine erfindungsgemäße Ausgleichsmembran mit einer als Noppen ausgebildeten Abriebeinrichtung;
- Fig. 3: eine Draufsicht in Richtung des Pfeils III in Fig. 2; und
- Fig. 4: eine Draufsicht auf eine erfindungsgemäße Ausgleichsmembran mit einer als ringförmige Verdickungsschicht ausgebildeten Abriebeinrichtung.

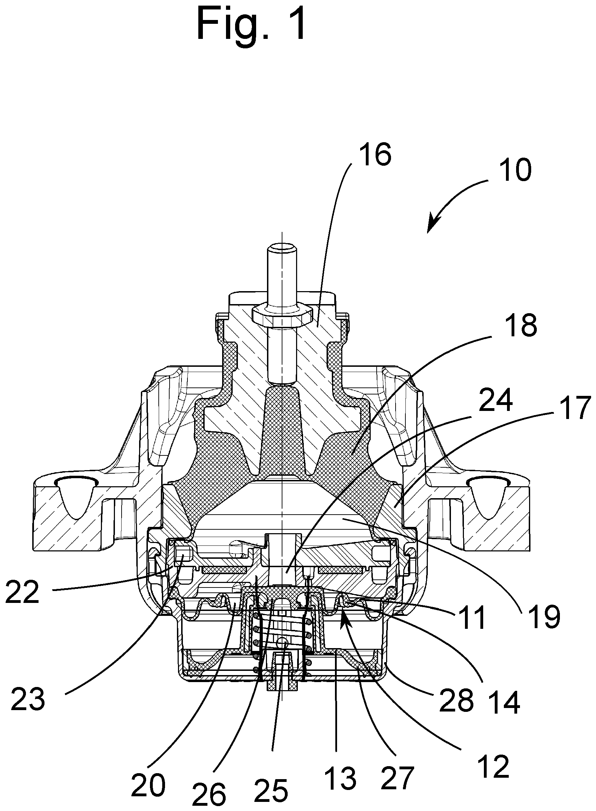

Das in Fig. 1 dargestellte hydraulisch dämpfende Lager 10 weist eine Tragfeder 18 auf, die rotationssymetrisch ausgebildet ist und aus einem elastomeren Material besteht. Die Tragfeder 18 verbindet ein Traglager 16, das ein nicht dargestelltes Aggregat abstützt, mit einem Auflager 17, das mit einer nicht dargestellten Karosserie verbunden ist. Die Tragfeder 18 begrenzt eine Arbeitskammer 19, die durch eine Trennwand 22 von einer Ausgleichskammer 20 getrennt ist. Die Ausgleichskammer 20 ist durch eine Ausgleichsmembran 11 begrenzt. In der Trennwand 22 ist ein Dämpfungskanal 23 eingebracht, der die Arbeitskammer 19 mit der Ausgleichskammer 20 verbindet. Die Arbeitskammer 19, die Ausgleichskammer 20 und der Dämpfungskanal 23 sind mit einem Fluid gefüllt.

Die Trennwand 22 weist mittig einen Tilgerkanal 24 auf. Dieser kann mit Hilfe einer Stelleinrichtung 25 abhängig vom Betriebszustand des Lagers 10 eine weitere Verbindung zwischen Arbeitskammer 19 und Ausgleichskammer 20 ausbilden. Die pneumatisch betätigbare Stelleinrichtung 25 weist ein federbelastetes Stellglied 26 auf, das an einer Austrittsöffnung des Tilgerkanals 24 angeordnet ist.

Das Stellglied 26 weist eine Stützplatte 27 auf, die in einem topfförmigen Deckel 28 einliegt. Bei der Auslenkung der Ausgleichsmembran 11 kann diese in Kontakt mit einer Kontaktfläche 13 der Stützplatte 27 geraten.

Die Ausgleichsmembran 11 weist eine Abriebeinrichtung 12 in Form von Noppen 14 auf, die derart angeordnet sind, dass im Falle eines Anschlagens der Ausgleichsmembran 11 an die Kontaktfläche 13 die Abriebeinrichtung 12 den ersten Kontakt aufbaut. Hierdurch wird eine Beschädigung der Ausgleichsmembran 11 vermieden und deren Lebensdauer erhöht.

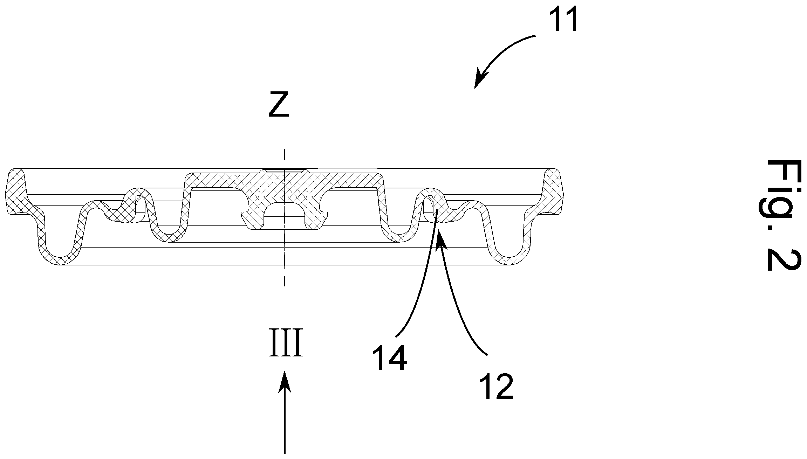

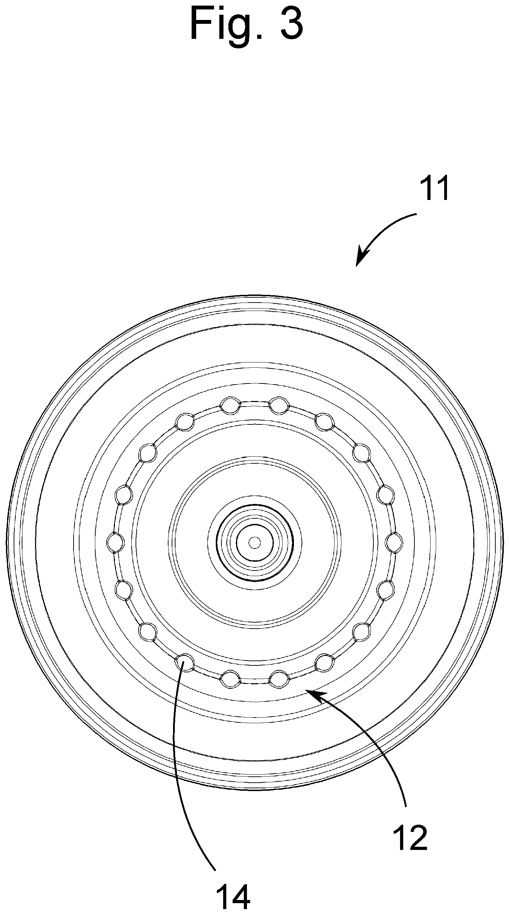

Fig. 2 und Fig. 3 zeigen Ausführungsformen der erfindungsgemäßen Ausgleichsmembran 11 im Vertikalschnitt und in einer Draufsicht.

Die Ausgleichsmembran 11 ist aus einem elastomeren Material hergestellt und radial kreisförmig um die Achse Z ausgebildet. Außerdem ist die Ausgleichsmembran 11 radial wellenförmig geformt. Die Ausgleichsmembran 11 weist mehrere Noppen 14 auf, die in Umfangsrichtung versetzt zueinander angeordnet sind und von der Ausgleichsmembran 11 abragen. Die Noppen 14 bestehen aus einem elastomeren Material und sind an die Ausgleichsmembran 11 anvulkanisiert. Somit sind die Noppen 14 einteilig mit der Ausgleichsmembran 11 ausgebildet.

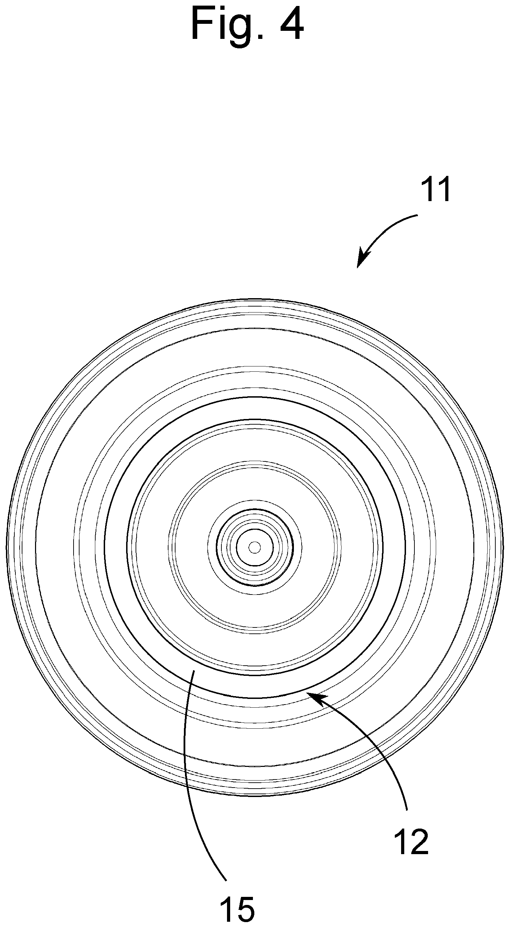

Fig. 4 zeigt eine weitere Ausführungsform der erfindungsgemäßen Ausgleichsmembran 11 in einer Draufsicht.

Die Ausgleichsmembran 11 unterscheidet sich von der Ausführungsform in Fig. 2 und Fig.3 in der Ausgestaltung der Abriebeinrichtung 12. Die hier gezeigte Abriebeinrichtung 12 ist als eine ringförmige Verdickungsschicht 15 ausgebildet, die von der Ausgleichsmembran 11 abragt. Die Verdickungsschicht 15 besteht aus einem elastomeren Material und ist an die Ausgleichsmembran 11 anvulkanisiert. Somit ist die ringförmige Verdickungsschicht 15 einteilig mit der Ausgleichsmembran 11 ausgebildet.

Durch die an der Ausgleichsmembran 11 vorgesehene Abriebeinrichtung 12 wird im Betrieb des Lagers 10 eine Beschädigung der Ausgleichsmembran 11 durch Kontakt mit einen Lagerteil vermieden. Die Abriebeinrichtung 12 erhöht somit die Lebensdauer des Lagers 10. Durch die Ausgestaltung der Abriebeinrichtung 12 wird die Volumensteifigkeit der Ausgleichsmembran 11 im Wesentlichen nicht beeinflusst.

### Bezugszeichenliste

- 10: hydraulisch dämpfendes Lager
- 11: Ausgleichsmembran
- 12: Abriebeinrichtung
- 13: Kontaktfläche
- 14: Noppen
- 15: Verdickungsschicht
- 16: Traglager
- 17: Auflager
- 18: Tragfeder
- 19: Arbeitskammer
- 20: Ausgleichskammer
- 22: Trennwand
- 23: Dämpfungskanal
- 24: Tilgerkanal
- 25: Stelleinrichtung
- 26: Stellglied
- 27: Stützplatte
- 28: topfförmiger Deckel

## Patentansprüche

1. Hydraulisch dämpfendes Lager (10), nämlich schaltbares Hydrolager, umfassend ein Traglager (16) und ein Auflager (17), die durch eine elastomere Tragfeder (18) miteinander verbunden sind, eine Arbeitskammer (19) und eine durch eine Ausgleichsmembran (11) aus einem elastomeren Material begrenzte Ausgleichskammer (20), die mit einem Fluid gefüllt, durch eine Trennwand (22) voneinander getrennt und über einen in die Trennwand (22) eingebrachten Dämpfungskanal (23) miteinander verbunden sind, und einen Tilgerkanal (24), der über eine Stelleinrichtung (25) schaltbar ist, **dadurch gekennzeichnet, dass** an der Ausgleichsmembran (11) eine Abriebeinrichtung (12) zum Abreiben an einer Kontaktfläche (13) des Lagers (10) vorgesehen ist.

2. Lager nach Anspruch 1, **dadurch gekennzeichnet, dass** die Abriebeinrichtung (12) mehrere voneinander beabstandete Noppen (14) aufweist, die von der Ausgleichsmembran abragen.

3. Lager nach Anspruch 1 oder 2, **dadurch gekennzeichnet, dass** die Abriebeinrichtung (12) eine ringförmige Verdickungsschicht (15) aufweist.

4. Lager nach einem der vorhergehenden Ansprüche, **dadurch gekennzeichnet, dass** die Abriebeinrichtung (12) ringförmig um die Mittelachse (Z) angeordnet ist und von der Ausgleichsmembran (11) abragt.

5. Lager nach einem der vorhergehenden Ansprüche, **dadurch gekennzeichnet, dass** die Abriebeinrichtung (12) an die Ausgleichsmembran (11) anvulkanisiert ist.

6. Lager nach einem der vorhergehenden Ansprüche, **dadurch gekennzeichnet, dass** der radiale Abstand der Abriebeinrichtung (12) zur Mittelachse (Z) entsprechend der Bauart des hydraulisch dämpfenden Lagers (10) derart festgelegt ist, dass während des Betriebs des hydraulisch dämpfenden Lagers (10), die Abriebeinrichtung (12) auf die Kontaktfläche (13) trifft.

7. Lager nach einem der vorhergehenden Ansprüche, **dadurch gekennzeichnet, dass** die Kontaktfläche (13) durch den Bereich einer umliegenden Komponente festgelegt ist, zu dem die Ausgleichsmembran (11) während des Betriebs im Falle eines Anschlagens den ersten Kontakt aufbaut.

## Claims

1. Hydraulically damping mount (10), namely a switchable hydraulic mount, comprising a support mount (16) and a rest mount (17) which are connected to one another by an elastomeric support spring (18), a working chamber (19) and a compensating chamber (20) which is delimited by a compensating diaphragm (11) made of an elastomeric material, the working chamber (19) and the compensating chamber (20) being filled with a fluid, being separated from one another by a partition wall (22) and being connected to one another via a damping channel (23) introduced into the partition wall (22), and an absorber channel (24) which is switchable via an actuating device (25), **characterised in that** an abrasion device (12) is provided on the compensating membrane (11) for abrading on a contact surface (13) of the mount (10).

2. Mount according to claim 1, **characterised in that** the abrasion device (12) has a plurality of burls (14) which are spaced apart from one another and project from the compensating membrane.

3. Mount according to claim 1 or 2, **characterised in that** the abrasive device (12) comprises an annular thickening layer (15).

4. Mount according to one of the preceding claims, **characterised in that** the abrasion device (12) is arranged annularly around the central axis (Z) and projects from the compensating membrane (11).

5. Mount according to one of the preceding claims, **characterised in that** the abrasion device (12) is vulcanised onto the compensating membrane (11).

6. Mount according to one of the preceding claims, **characterised in that** the radial distance of the abrasive device (12) from the central axis (Z) is fixed in accordance with the design of the hydraulically damping mount (10) such that, during operation of the hydraulically damping mount (10), the abrasion device (12) abuts against the contact surface (13).

7. Mount according to one of the preceding claims, **characterised in that** the contact surface (13) is fixed by the region of a surrounding component to which the compensating diaphragm (11) makes the first contact during operation in the event of abutment.

## Revendications

1. Support (10) à amortissement hydraulique, en particulier support hydraulique commutable, comportant un support porteur (16) et un appui (17) qui sont reliés l'un à l'autre par un ressort porteur élastomère (18), une chambre de travail (19) et une chambre de compensation (20) délimitée par une membrane de compensation (11) en matériau élastomère, qui sont remplies d'un fluide, séparées l'une de l'autre par une cloison de séparation (22) et reliées l'une à l'autre par un canal d'amortissement (23) réalisé dans la cloison de séparation (22), ainsi qu'un canal d'absorption (24) commutable par un organe de réglage (25),
**caractérisé en ce que**
un moyen de frottement (12) est prévu sur la membrane de compensation (11), qui est destiné à frotter sur une surface de contact (13) du support (10).

2. Support selon la revendication 1,
**caractérisé en ce que**
le moyen de frottement (12) comprend plusieurs boutons (14) qui sont espacés les uns des autres et qui font saillie de la membrane de compensation.

3. Support selon la revendication 1 ou 2,
**caractérisé en ce que**
le moyen de frottement (12) comprend une couche d'épaississement (15) annulaire.

4. Support selon l'une des revendications précédentes,
**caractérisé en ce que**
le moyen de frottement (12) est disposé sous forme annulaire autour de l'axe central (Z) et fait saillie de la membrane de compensation (11).

5. Support selon l'une des revendications précédentes,
**caractérisé en ce que**
le moyen de frottement (12) est rapporté par vulcanisation sur la membrane de compensation (11).

6. Support selon l'une des revendications précédentes,
**caractérisé en ce que**
la distance radiale du moyen de frottement (12) par rapport à l'axe central (Z) est fixée en correspondance du type de construction du support (10) à amortissement hydraulique, de telle sorte que pendant le fonctionnement du support (10) à amortissement hydraulique, le moyen de frottement (12) rejoigne la surface de contact (13).

7. Support selon l'une des revendications précédentes,
**caractérisé en ce que**
la surface de contact (13) est fixée par la zone d'un composant voisin, avec laquelle la membrane de compensation (11) vient en contact en premier pendant le fonctionnement, dans le cas d'une venue en butée.
